# EUROPÄISCHE PATENTSCHRIFT

(11) **EP 0 952 939 B1**
(45) Veröffentlichungstag und Bekanntmachung des Hinweises auf die Patenterteilung: **11.06.2003**
(21) Anmeldenummer: 98956809.2
(22) Anmeldetag: 09.10.1998
(51) Int. Cl.: B60S 1/04, B60S 1/34

(54) **ANTRIEBSVORRICHTUNG FÜR EINE WISCHANLAGE, INSBESONDERE FÜR SCHEIBEN AN KRAFTFAHRZEUGEN**
DRIVING DEVICE FOR A WINDSHIELD WIPER, ESPECIALLY FOR VEHICLE WINDOW PANES
DISPOSITIF D'ENTRAINEMENT D'UN SYSTEME D'ESSUIE-GLACE, NOTAMMENT POUR DES VITRES DE VEHICULE

(30) Priorität: 16.10.1997 DE 19745690
(43) Veröffentlichungstag der Anmeldung: 03.11.1999
(73) Patentinhaber: ROBERT BOSCH GMBH, 70442 Stuttgart (DE)
(72) Erfinder: BRÜMMER, Dietmar, D-77830 Bühlertal (DE); MAYER, Jürgen, D-76571 Gaggenau (DE); BOOS, Tino, D-76532 Baden-Baden (DE)
(86) Internationale Anmeldenummer: DE9802990
(87) Internationale Veröffentlichungsnummer: WO99020498

(56) Entgegenhaltungen:
- EP-A- 0 694 455
- EP-A- 0 704 356
- WO-A-90/09299
- WO-A-92/00865
- DE-U- 7 914 978
- FR-A- 2 670 730

## Beschreibung

Die Erfindung betrifft eine Antriebsvorrichtung für eine Wischanlage, insbesondere für Scheiben an Kraftfahrzeugen, mit den im Oberbegriff des Anspruchs 1 genannten Merkmalen. Eine solche Vorrichtung ist aus dem Dokument EP-A-0 704 356, auf das später kurz eingegangen wird, bekannt.

### Stand der Technik

Antriebsvorrichtungen der gattungsgemäßen Art sind bekannt. Diese weisen ein in der Regel als Hohlstange ausgebildetes Halteelement auf, das an seinen freien Enden Lager zur Aufnahme einer Wischerwelle trägt. Die Lager werden üblicherweise als Druckgußteile oder als Kunststoff-Spritzgußteile hergestellt. Um die Lager form- und kraftschlüssig mit dem Halteelement zu verbinden, ist es bekannt, die Lager mit einem Stutzen auszubilden, der in das als Hohlstange ausgebildete Halteelement eingreift. Anschließend wird das Halteelement, das in der Regel ein Blechformteil ist, mit einer Fügekraft beaufschlagt, so daß eine bereichsweise plastische Verformung des Halteelementes gegeben ist. Um einen Kraft- und Formschluß zu erreichen, besitzt der Stutzen des Lagers im Bereich der plastischen Verformung des Halteelementes Ausnehmungen, in die das Material des Halteelementes drängbar ist. Bei den bekannten Antriebsvorrichtungen ist nachteilig, dass dieser Kraft- und Formschluss zwischen dem, insbesondere als Kunststoffteil ausgebildeten Lager und dem Halteelement nicht mit genügend großer Sicherheit herstellbar ist, da aufgrund des Elastizitätsmodules des Kunststoffes dieser während des Verpressens der Fügeverbindung zwischen dem Lager und dem Halteelement zum Fließen neigt.

Aus EP-A-0 704 356 ist eine Antriebsvorrichtung für eine Wischanlage bekannt, die ein ortsfest angeordnetes Halteelement umfasst, das wenigstens einseitig ein Lager zur Aufnahme einer Wischerwelle aufweist, wobei das Lager als Kunststoffteil ausgebildet ist und mit dem Halteelement durch eine partielle plastische Verformung des Halteelementes form- und kraftschlüssig verbunden ist. Das Lager bildet eine Buchse aus, in die das Halteelement eingreift.

### Vorteile der Erfindung

Die erfindungsgemäße Antriebsvorrichtung mit den im Anspruch 1 genannten Merkmalen bietet demgegenüber den Vorteil, dass in einfacher Weise eine sichere form- und kraftschlüssige Verbindung zwischen dem Lager und dem Halteelement ausgebildet ist. Dadurch, dass das Lager einen Stutzen aufweist, der von der Buchse umgriffen wird, wobei das Halteelement in einem zwischen dem Stutzen und der Buchse ausgebildeten Ringraum eingreift, das Halteelement innerhalb des Ringraumes partiell plastisch verformbar ist und ein Formschluss und ein Kraftschluss zwischen dem Halteelement und dem Stutzen besteht, wird vorteilhaft erreicht, dass das Halteelement durch dessen plastische Verformung praktisch in den Ringraum zwischen dem Stutzen und dem Halteelement des Lagers eingespannt ist. Hierdurch ergibt sich, dass über den Kraftschluss zwischen der Buchse und dem Halteelement eine zusätzliche auf die Fügeverbindung wirkende axiale und/oder radiale Kraft abgefangen werden kann, so daß das Lager sicher an dem Halteelement befestigt ist. Insbesondere wird durch die Verspannung des Halteelementes zwischen dem Stutzen und der Buchse ein Ausgleich von Fertigungstoleranzen in einfacher Weise möglich. Sowohl Fertigungstoleranzen des Lagers, insbesondere dessen in das Halteelement einführbaren Stutzens, als auch des Halteelementes selber können durch die Verspannung in dem Ringraum des Lagers zwischen dem Stutzen und der Buchse ausgeglichen werden.

Weitere vorteilhafte Ausgestaltungen der Erfindung ergeben sich aus den übrigen, in den Unteransprüchen genannten Merkmalen.

### Zeichnungen

Die Erfindung wird nachfolgend in einem Ausführungsbeispiel anhand der zugehörigen Zeichnungen näher erläutert. Es zeigen:
- Figur 1: eine schematische Gesamtansicht einer Antriebsvorrichtung für Scheibenwischer;
- Figuren 2 und 3: eine Draufsicht und einen Längsschnitt eines Lagers und
- Figuren 4 und 5: um jeweils 90° gedrehte Längsschnitte einer Verbindungsstelle zwischen dem Lager und einem Halteelement.

### Beschreibung des Ausführungsbeispiels

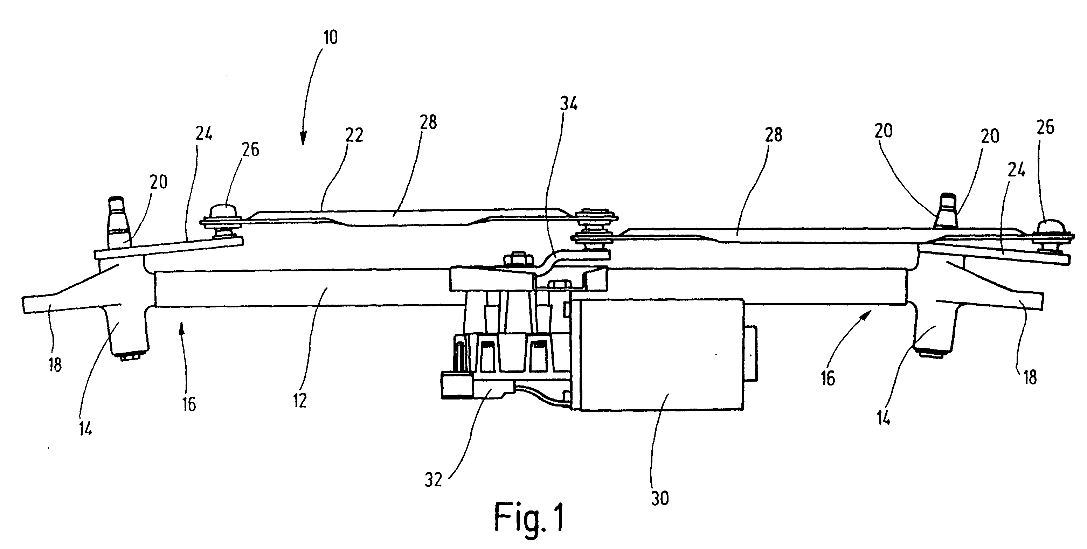

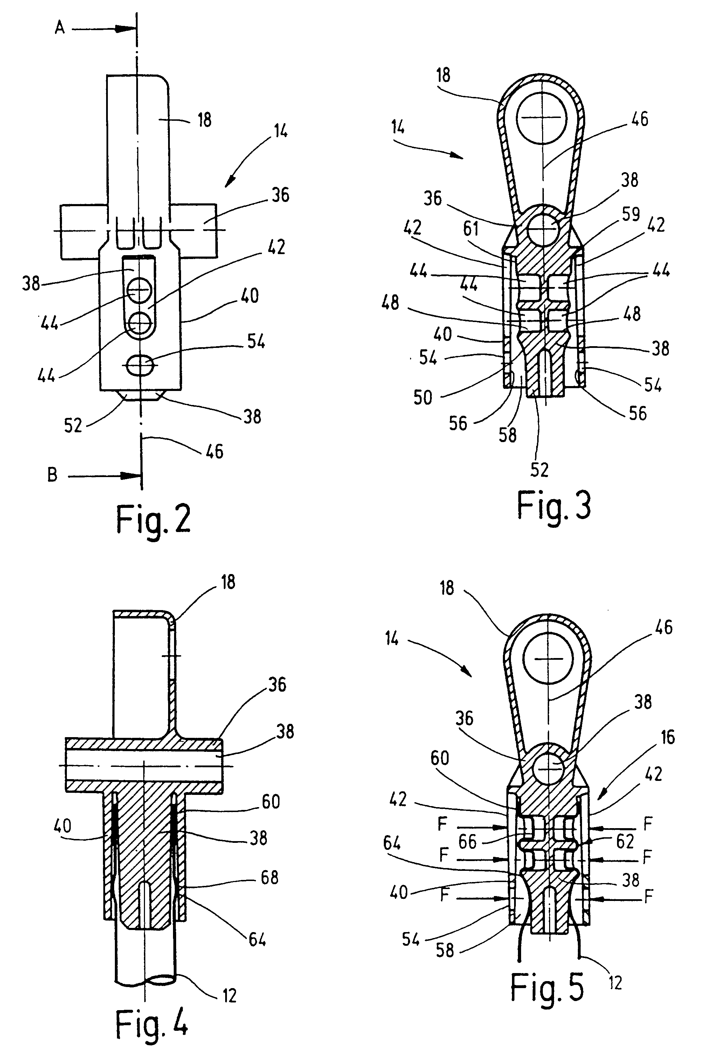

Figur 1 zeigt eine Gesamtansicht einer Antriebsvorrichtung 10 für Scheibenwischer an Kraftfahrzeugen. Die Antriebsvorrichtung 10 besitzt ein Halteelement 12, das ortsfest in einem Kraftfahrzeug angeordnet ist. Das Halteelement 12 weist an seinen beiden Enden jeweils ein Lager 14 auf. Die Lager 14 sind mit dem Halteelement 12 in einem Befestigungsbereich 16, dessen konkrete Ausbildung anhand der Figuren 2 bis 5 noch detaillierter erläutert wird, gefügt. An ihren, dem Halteelement 12 abgewandten, Seiten sind die Lager 14 jeweils mit einem Befestigungselement 18 versehen, das eine Aufnahme für ein Befestigungsmittel aufweist. Mittels der Befestigungselemente 18 erfolgt die ortsfeste Befestigung der Antriebsvorrichtung 10 an einem Karosserieteil des Kraftfahrzeuges.

Die Lager 14 nehmen eine Wischerwelle 20 auf, die drehbeweglich, jedoch axial festgelegt angeordnet ist. Die Wischerwelle 20 ragt über das Lager 14 hinaus, wobei an die Wischerwelle 20 ein Kupplungsgestänge 22 angreift. Ein Arm 24 ist einerseits drehfest mit der Wischerwelle 20 verbunden und andererseits über ein Gelenk 26 mit einer Kupplungsstange 28 verbunden. An das freie Ende der Wischerwelle 20 ist ein Wischerarm, der in bekannter Weise ein Wischerblatt trägt, drehfest festlegbar.

Die Antriebsvorrichtung 10 weist ferner einen Antriebsmotor 30 auf, der über ein Getriebe 32 eine Kurbel 34 antreibt. Die Kurbel 34 ist mit den Kupplungsstangen 28 gelenkig verbunden.

Die Funktion der Antriebsvorrichtung 10 ist allgemein bekannt, so daß im Rahmen der vorliegenden Beschreibung auf eine ausführliche Erläuterung verzichtet wird. Über den Antriebsmotor 30 wird die Kurbel 34 in Rotation versetzt. Hierdurch erfahren die Kupplungsstangen 28 eine im wesentlichen entlang ihrer Längsachse ausgerichtete axiale Bewegung. Diese wird über die Kupplungsstangen 24 in eine Schwenkbewegung umgewandelt und auf die Wischerwellen 20 übertragen. Hierdurch erfahren die an den Wischerwellen 20 angeordneten Wischerarme die bekannte Schwenkbewegung.

Nachfolgend soll anhand der Figuren 2 bis 5 der erfindungsgemäße Aufbau des Lagers 14, insbesondere des Befestigungsbereiches 16 erläutert werden. Das Lager 14 besteht aus einem Kunststofformteil das mittels bekannter Verfahren in für eine Massenproduktion geeignete Weise als Kunststoff-Spritzgußteil herstellbar ist.

In Figur 2 ist das Lager 14 in einer Draufsicht und in Figur 3 in einem Längsschnitt entsprechend der Linie A-B gemäß Figur 2 gezeigt. Gleiche Teile wie in Figur 1 sind mit gleichen Bezugszeichen versehen und nicht nochmals erläutert. Das Lager 14 bildet eine Aufnahme 36 für die Wischerwelle 20 aus. Diese besitzt eine Durchgangsöffnung 38, in die die Wischerwelle 20 verdrehbar, jedoch axial festlegbar, anordbar ist. In Richtung des Halteelementes 12 (Figur 1) erstreckt sich ein Stutzen 38, der von einer Buchse 40 umgriffen wird. Sowohl der Stutzen 38 als auch die Buchse 40 sind einstückig mit den anderen Abschnitten beziehungsweise Ausformungen des Lagers 14 ausgebildet. Die Buchse 40 besitzt diametral gegenüberliegend Durchbrüche 42, deren axiale Erstreckung so gewählt ist, daß im Stutzen 38 eingebrachte Taschen 44 im Bereich der Durchbrüche 42 liegen. Die Taschen 44 sind als radial zu einer Längsachse 46 des Lagers 14 angeordnete Vertiefungen 48 ausgebildet.

Der Stutzen 38 geht über eine sich konisch verjüngende Mantelfläche 50 in einen durchmesserkleineren Abschnitt 52 über. Im Bereich der Mantelfläche 50 ist in der Buchse 40 jeweils eine Vertiefung 54 strukturiert, die entweder als Durchbruch ausgebildet sind oder von einem innenliegenden Steg 56 überspannt sind, der in noch zu erläuternden Weise als Sollbruchstelle dient.

Insbesondere in der Schnittdarstellung in Figur 3 wird deutlich, daß es durch die Anordnung des Stutzens 38 und der Buchse 40 zur Ausbildung eines Ringraumes 58 zwischen dem Stutzen 38 und der Buchse 40 kommt.

Der Ringraum 58 zwischen dem Stutzen 38 und der Buchse 40 ist derart ausgebildet, daß ein in Nähe des Grundes 59 liegender Abschnitt 61 des Ringraumes 58 einer Materialstärke des Halteelementes 12 entspricht, so daß dieses zur Vorbereitung der anhand der Figuren 4 und 5 noch näher erläuterten Fügeverbindung quasi klemmend in den Ringraum 58 eingebracht werden kann und somit in seiner Lage vorpositioniert ist.

Figur 5 zeigt eine der Figur 3 entsprechende Schnittdarstellung, wobei hier der Befestigungsbereich 16 zwischen dem Lager 14 und dem Halteelement 12 verdeutlicht wird. Das Halteelement 12 ist als Hohlprofil, insbesondere als Hohlzylinder, ausgebildet und mit seinem Ende 60 in den Ringraum 58 geführt. Hierdurch umgreift das Halteelement 12 einerseits den Stutzen 38 und wird andererseits selber von der Buchse 40 umgriffen. In dieser Position wird das Halteelement 12 mit einer Fügekraft F beaufschlagt. Hierzu greifen Stempel einer nicht dargestellten Fügeeinrichtung durch die Durchbrüche 42 sowie die Vertiefung 54. Die Geometrie der Stempel ist hierbei der Querschnittsfläche der Taschen 44 beziehungsweise der Kontur der Mantelfläche 50 angepaßt, wobei eine Materialstärke des Halteelementes 12 berücksichtigt ist. Durch das Beaufschlagen des Halteelementes 12 mit der Fügekraft F kommt es zur Ausbildung eines Formschlusses 62 und eines Kraftschlusses 64. Das Halteelement 12 wird plastisch verformt, so daß Abschnitte 66 des Halteelementes 12 in die Taschen 44 gedrängt werden. Durch die Ausbildung des Formschlusses 62 ist das Lager 14 mit dem Halteelement 12 derart verbunden, daß axial zur Längsachse 46 wirkende Kräfte nicht zu einem Lösen der Fügeverbindung zwischen dem Lager 14 und dem Halteelement 12 führen können. Gleichzeitig ist das Lager 14 gegen Verdrehen gesichert, da der Formschluß 62 an den radial gegenüberliegend ausgebildeten Taschen 44 wirkt. In den um 90° zu der Darstellung in Figur 5 gedrehten Bereichen des Halteelementes 12 liegt dessen Ende 60, wie die entsprechend um 90° gedrehte Darstellung in Figur 4 zeigt, im wesentlichen parallel an dem Stutzen 38 an.

Im Bereich der Mantelfläche 50, die, wie die Darstellung in Figur 4 verdeutlicht, ebenfalls nur an diametral gegenüberliegenden Seiten des Stutzens 38 ausgebildet ist, kommt es durch die Beaufschlagung mit der Fügekraft F in diesem Bereich zur Auslenkung von Abschnitten 68 des Halteelementes 12, die hierzu im wesentlichen um 90° verdreht verlaufen. Mit dem plastischen Verformen des Halteelementes 12 in Richtung der Mantelflächen 50 kommt es also zusätzlich zur Ausformung des Halteelementes 12 in seinen Abschnitten 68 radial nach außen. Die Abschnitte 68 gelangen hierbei in Berührungskontakt mit der Buchse 40 und bilden einen zusätzlichen Kraftschluß 64.

Insgesamt wird also durch die Ausbildung des Lagers 14, insbesondere das Vorsehen dessen von der Buchse 40 umgriffenen Stutzen 38, zur Ausbildung eines Formschlusses zwischen dem Halteelement 12 und dem Stutzen 38 sowie zur Ausbildung eines Kraftschlusses zwischen dem Halteelement 12 und dem Stutzen 38 und gleichzeitig zwischen dem Halteelement 12 und der Buchse 40. Hierdurch wird eine zuverlässige, dauernd feste Fügeverbindung zwischen dem Halteelement 12 und dem Lager 14 realisiert, die auch bei während des bestimmungsgemäßen Einsatzes der Antriebsvorrichtung 10 auftretender mechanischer Belastung, beispielsweise durch Vibrationen, sicher standhält und nicht lockert. Hierdurch wird die exakte Führung der die Lager 14 durchgreifende Wischerwelle 20 gewährleistet, so daß diese leichtgängig bleibt.

Neben dem zusätzlichen Kraftschluß 64 zwischen dem Halteelement 12 und der Buchse 40 ist durch die Ausbildung des Ringraumes 58 ein Toleranzausgleich, von Fertigungstoleranzen, sowohl des Lagers 14, insbesondere dessen Stutzens 38 und des Halteelementes 12 möglich.

Nach weiteren, nicht dargestellten Ausführungsbeispielen, kann beispielsweise auf die separate Ausbildung der Vertiefungen 54 verzichtet werden. Hierzu werden entweder die Durchbrüche 42 entsprechend axial verlängert, so daß durch die Durchbrüche 42 hindurch die plastische Verformung des Halteelementes 12 an den Mantelflächen 50 des Stutzens 38 erfolgen kann. Nach einer weiteren Variante kann die Fügekraft F im Bereich der Mantelfläche 50 des Stutzens 38 unmittelbar auf die Buchse 40 ausgeübt werden, die dadurch sich elastisch verformt, so daß die Fügekraft F über die Buchse 40 auf das Halteelement 12 aufgebracht wird. Nach Beendigung des Fügevorganges kommt die Buchse 40 aufgrund deren Elastizität in ihre Ursprungslage zurück.

## Patentansprüche

1. Antriebsvorrichtung für eine Wischanlage, insbesondere für Scheiben an Kraftfahrzeugen, mit einem ortsfest angeordneten Halteelement, das wenigstens einseitig ein Lager (14) zur Aufnahme einer Wischerwelle aufweist, wobei das Lager (14) als Kunststoffteil ausgebildet ist und eine Buchse (40) umfasst und mit dem Halteelement durch eine partielle plastische Verformung des Halteelementes form- und kraftschlüssig verbunden ist, wobei ein Kraftschluss (64) zwischen dem Halteelement (12) und der Buchse (40) besteht, **dadurch gekennzeichnet, dass** das Lager (14) einen Stutzen (38) aufweist, der von der Buchse (40) umgriffen wird, wobei das Halteelement (12) in einem zwischen dem Stutzen (38) und der Buchse (40) ausgebildeten Ringraum (58) eingreift, das Halteelement (12) innerhalb des Ringraumes (58) partiell plastisch verformbar ist und ein Formschluss (62) und ein Kraftschluss (64) zwischen dem Halteelement (12) und dem Stutzen (38) besteht.

2. Antriebsvorrichtung nach Anspruch 1, **dadurch gekennzeichnet, daß** die Buchse (40) wenigstens einen Durchbruch (42) aufweist, dem im Stutzen (38) ausgebildete Taschen (44) zugeordnet sind, wobei das Halteelement (12) durch den Durchbruch (42) mit einer Fügekraft (F) beaufschlagbar ist, so daß dieses teilweise in die Taschen (44) drängbar ist.

3. Antriebsvorrichtung nach Anspruch 2, **dadurch gekennzeichnet, daß** die Buchse (40) diametral gegenüberliegend zwei Durchbrüche (42) und entsprechende Taschen (44) aufweist.

4. Antriebsvorrichtung nach einem der vorhergehenden Ansprüche, **dadurch gekennzeichnet, daß** der Stutzen (38) eine sich konisch verjüngende Mantelfläche (50) aufweist.

5. Antriebsvorrichtung nach einem der vorhergehenden Ansprüche, **dadurch gekennzeichnet, daß** die Buchse (40) im Bereich der Mantelfläche (50) eine vorgeprägte Vertiefung (54) aufweist.

6. Antriebsvorrichtung nach einem der vorhergehenden Ansprüche, **dadurch gekennzeichnet, daß** die Mantelfläche (50) an diametral gegenüberliegenden Abschnitten des Stutzens (38) ausgebildet ist.

7. Antriebsvorrichtung nach einem der vorhergehenden Ansprüche, **dadurch gekennzeichnet, daß** das Halteelement (12) im Bereich der Mantelflächen (50) mit einer Fügekraft (F) beaufschlagbar ist, so daß eine plastische, radial nach innen gerichtete Verformung des Halteelementes (12) erfolgt, und um etwa 90° zu den Mantelflächen (50) verdreht verlaufende Abschnitte (68) des Halteelementes (12) radial nach außen verformt werden, so daß diese zur Ausbildung des Kraftschlusses (64) in Anlagekontakt mit der Buchse (40) gelangen.

## Claims

1. Driving device for a wiper system, in particular for windows on motor vehicles, having a retaining element which is arranged in a positionally fixed manner and has, at least on one side, a bearing (14) for holding a wiper shaft, the bearing (14) being designed as a plastic part and comprising a bushing (40) and being connected in a form-fitting and frictional manner to the retaining element by a partial plastic deformation of the retaining element, there being a frictional' connection (64) between the retaining element (12) and the bushing (40), **characterized in that** the bearing (14) has a connection piece (38) around which the bushing (40) engages, the retaining element (12) engaging in an annular space (58) which is formed between the connection piece (38) and the bushing (40), the retaining element (12) being partially plastically deformable within the annular space (58) and there being a form-fitting connection (62) and a frictional connection (64) between the retaining element (12) and the connection piece (38).

2. Driving device according to Claim 1, **characterized in that** the bushing (40) has at least one aperture (42) to which pockets (44) formed in the connection piece (38) are assigned, the retaining element (12) being capable of being acted upon by a joining force (F) through the aperture (42), with the result that it can be pushed partially into the pockets (44).

3. Driving device according to Claim 2, **characterized in that** the bushing (40) has two apertures (42) and corresponding pockets (44) lying diametrically opposite one another.

4. Driving device according to one of the preceding claims, **characterized in that** the connection piece (38) has a conically tapering casing surface (50).

5. Driving device according to one of the preceding claims, **characterized in that** the bushing (40) has a depression (54) impressed in advance in the region of the casing surface (50).

6. Driving device according to one of the preceding claims, **characterized in that** the casing surface (50) is formed on diametrically opposite sections of the connection piece (38).

7. Driving device according to one of the preceding claims, **characterized in that** the retaining element (12) can be acted upon by a joining force (F) in the region of the casing surfaces (50), with the result that a plastic, radially inwardly directed deformation of the retaining element (12) takes place, and sections (68) of the retaining element (12) which run rotated through approximately 90° with respect to the casing surfaces (50) are deformed radially outwards, so that the said sections pass into bearing contact with the bushing (40) so as to form the frictional connection (64).

## Revendications

1. Dispositif d'entraînement d'un système d'essuie-glace, notamment pour les vitres d'un véhicule automobile, comportant un premier élément de fixation installé de manière fixe, qui comprend au moins d'un côté un palier (14) pour recevoir un axe d'essuie-glace,
le palier (14) constitué par une pièce en matière plastique comprend un manchon (40) et il est relié à l'élément de fixation par une déformation plastique partielle de l'élément de fixation, pour une liaison par la forme et la force,
une liaison par la force (64) existant entre l'élément de fixation (12) et le manchon (40).
**caractérisé en ce que**
le palier (14) comporte un appui (38) entouré par le manchon (40),
l'élément de fixation (12) pénètre dans un volume annulaire (58) formé entre l'appui (38) et le manchon (40), l'élément de fixation (12) étant déformable en partie plastiquement à l'intérieur du volume annulaire (58) et
il existe une liaison par la forme (62) et une liaison par la force (64) entre l'élément de fixation (12) et l'appui (38).

2. Dispositif d'entraînement selon la revendication 1.
**caractérisé en ce que**
le manchon (40) comporte au moins un passage (42) auquel sont associées des poches (44) formées dans l'appui (38), l'élément de fixation (12) pouvant être sollicité à travers le passage (42) par une force d'assemblage (F) de manière à pénétrer en partie dans les poches (44).

3. Dispositif d'entraînement selon la revendication 2,
**caractérisé en ce que**
le manchon (40) comporte deux passages (42) diamétralement opposés et des poches (44) correspondantes.

4. Dispositif d'entraînement selon l'une des revendications précédentes,
**caractérisé en ce que**
l'appui (38) présente une surface enveloppe (50) diminuant de manière conique.

5. Dispositif d'entraînement selon l'une quelconque des revendications précédentes,
**caractérisé en ce que**
le manchon (40) présente une cavité (54) préformée dans la zone de la surface enveloppe (50).

6. Dispositif d'entraînement selon l'une quelconque des revendications précédentes.
**caractérisé en ce que**
la surface enveloppe (50) est réalisée sur des segments diamétralement opposés de l'appui (38).

7. Dispositif d'entraînement selon l'une quelconque des revendications précédentes,
**caractérisé en ce que**
l'élément de fixation (12) reçoit une force d'assemblage (F) au niveau de la surface enveloppe (50) de manière à obtenir une déformation plastique de l'élément de fixation (12), cette déformation étant dirigée radialement vers l'intérieur, et des segments (68) de l'élément de fixation (12) qui sont tournés d'environ 90° par rapport aux surfaces enveloppes (50) sont déformés radialement vers l'extérieur pour réaliser la liaison par la force (64) par un contact d'appui avec le manchon (40).
